# EUROPÄISCHE PATENTSCHRIFT

(11) **EP 0 347 475 B1**
(45) Veröffentlichungstag und Bekanntmachung des Hinweises auf die Patenterteilung: **03.11.1993**
(21) Anmeldenummer: 88109781.0
(22) Anmeldetag: 20.06.1988
(51) Int. Cl.: F16H 1/20, B30B 11/24

(54) **Getriebe**
Gearing
Transmission

(43) Veröffentlichungstag der Anmeldung: 27.12.1989
(73) Patentinhaber: Werner & Pfleiderer GmbH, 70469 Stuttgart (DE)
(72) Erfinder: Manecke, Reinhard, D-7000 Stuttgart 50 (DE)

(56) Entgegenhaltungen:
- EP-A- 118 358
- EP-A- 0 261 349
- DE-A- 3 327 193
- DE-B- 1 188 890
- DE-C- 372 455
- GB-A- 207 939

## Beschreibung

Die Erfindung betrifft ein Getriebe mit den Merkmalen des Oberbegriffs des Anspruches 1.
Die Antriebsräder eines solchen Getriebes wirken je auf ein schrägverzahntes Ritzel einer anzutreibenden Welle, wobei diese schrägverzahnten Ritzel auf getrennten Wellen sitzen können. Das jeweils halbe Drehmoment wird in diesem Fall auf eine der beiden Wellen übertragen. Zur weiteren Leistungsaufteilung kann auf der Antriebswelle ein zweites Antriebsritzel sitzen, das zur nochmaligen Drehmomentaufteilung auf ein identisches Getriebe der im Oberbegriff des Anspruches 1 angegebenen Art wirkt, dessen Antriebsräder zum Herstellen eines zweiten Zahneingriffs mit den genannten Ritzeln der beiden anzutreibenden Wellen kämmen, wie dies in der DE-C-33 27 193 beschrieben ist. Die anzutreibenden Wellen sind hierbei die Schneckenwellen eines Doppelschneckenextruders.

Selbstverständlich kann das Getriebe der im Oberbegriff des Anspruchs 1 beschriebenen Art aber auch nur in einfacher Form zur Drehmomentaufteilung dienen. In diesem Fall wirken die beiden Abtriebsräder auf zwei entgegengesetzt schrägverzahnte Ritzel, die auf einer gemeinsamen, anzutreibenden Welle sitzen.

Bei dem bekannten Getriebe sind die auf den Zwischenwellen sitzenden, miteinander kämmenden Zahnräder geradwerzahnt, um der ersten Zwischenwelle zur selbsttätigen Lasteinstellung eine axiale Verschiebung gegenüber der zweiten, axial festgelegten Zwischenwelle zu gestatten. Die Gradverzahnung begrenzt das übertragende Drehmoment und ist geräuschvoller als eine Schrägverzahnung.

Der Erfindung liegt deshalb die Aufgabe zugrunde, ein Getriebe der im Oberbegriff des Anspruchs 1 beschriebenen Art so auszubilden, daß das übertragende Drehmoment gesteigert und das Getriebegeräusch verringert werden kann.

Zur Lösung dieser Aufgabe dienen die Merkmale des Anspruchs 1.

Bei dem Getriebe nach der Erfindung ist die Gradverzahnung durch eine Schrägverzahnung ersetzt. Dadurch, daß der Zahnkranz eines der Zahnräder axial verschieblich gegenüber seiner Zwischenwelle ausgebildet ist und daß Mittel zum Abstützen der durch die Schrägverzahnung der Zanhräder erzeugten Axialkräfte vorgesehen sind, wird die freie axiale Verschieblichkeit der ersten Zwischenwelle ohne Beeinflussung durch die in der Schrägverzahnung übertragenen Zahnkräfte beibehalten.

Die Schrägverzahnung ist als Einfach-Schrägverzahnung ausgeführt, wobei der axial verschiebbare Zahnkranz zu dem Zahnrad auf der ersten Zwischenwelle gehört und gehäusefest abgestützt ist, um die Axialkräfte aufzunehmen.

Die gehäusefeste Abstützung erfolgt dabei durch gehäusefeste Stützringe. Bei einer Weiterbildung dieser Ausführung können zwischen den gehäusefesten Stützringen und dem Zahnkranz Wälz-oder Gleitlager eingebaut sein.

Das Getriebe wird vorteilhaft in der in Anspruch 3 erläuterten "verdoppelten" Form zur Drehmomentaufteilung zum Antrieb der beiden Schneckenwellen eines Doppelschneckenextruders eingesetzt.

Die Erfindung ist im folgenden anhand schematischer Zeichnungen an Ausführungsbeispielen mit weiteren Einzelheiten näher erläutert. Es zeigen:
- Fig. 1 und 2: in Seitenansicht und Draufsicht ein Getriebeschema mit zwei Getrieben, nämlich einem oberen Getriebezug "o" und einem identisch ausgebildeten unteren Getriebezug "u".
- Fig. 3: in einer Schnittdarstellung entsprechend Fig. 2, eine Einzelheit bei V in Fig. 2;
- Fig. 4: ein Getriebeschema gemäß Fig. 2 des Getriebezuges "u" nach einer Ausführung der Erfindung;
- Fig. 5: eine Einzelheit bei VII in Fig. 4;
- Fig. 6: ein Getriebeschema des Getriebezuges "u" in einer weiteren Ausführung nach der Erfindung;
- Fig. 7: eine Einzelheit bei IX in Fig. 8.

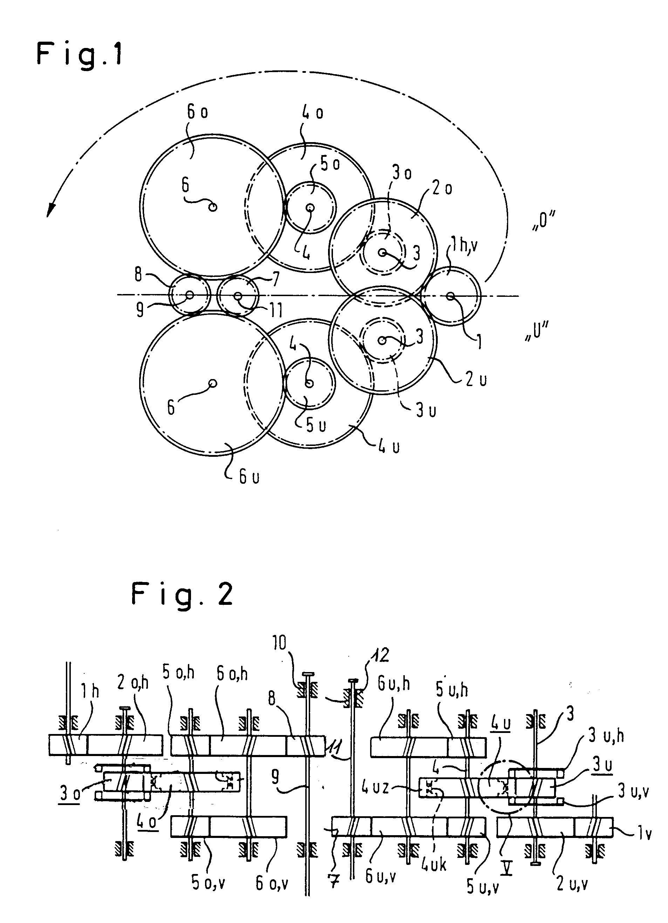

Zum besseren Verständnis ist in Fig. 2 der obere Getriebezug "o" in Fig. 2 nach links in die Zeichenebene geklappt, wie dies durch den strichpunktierten Pfeil in Fig. 1 angedeutet ist. Jeder der beiden Getriebezüge "o" und "u" bildet für sich ein Getriebe. Die Verdoppelung hat den Zweck der Drehmomentauf teilung und damit der Halbierung der Zahnkräfte im Abtrieb. Wenn hierauf im einen oder anderen Anwendungsfall verzichtet werden kann, genügt das Vorsehen nur eines der beiden Getriebezüge.

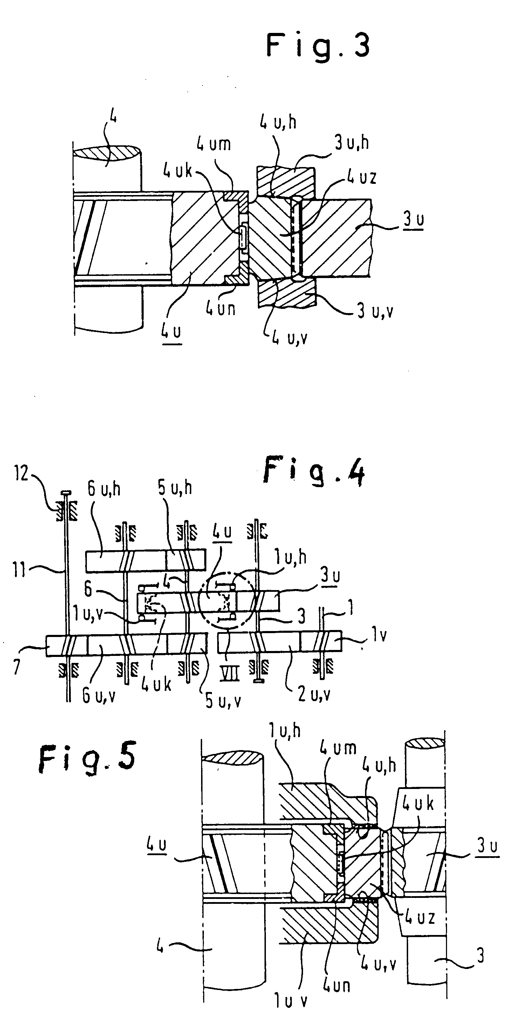

In der folgenden Beschreibung ist mit dem Buchstaben "o" jedes Zahnrad des oberen Getriebezuges und mit dem Buchstaben "u" jedes Zahnrad des unteren Getriebezuges bezeichnet (s. Fig. 1). Die Figuren 3 bis 7 zeigen nur den Getriebezug "u".

In den Figuren 2 bis 7 sind mit dem Buchstaben "v" vordere Zahnräder und mit dem Buchstaben "h" hintere Zahnräder bezeichnet.

Beide Antriebsritzel 1h und 1v sitzen auf einer gemeinsamen Antriebswelle 1h und sind entgegengesetzt schrägverzahnt (s. die Strichsymbole). Sie treiben uber die beiden schrägverzahnten Räder 2uv, 2oh den unteren Getriebezug "u" bzw. den oberen Getriebezug "o", wodurch eine erste Drehmomentaufteilung erfolgt.

Im folgenden ist lediglich der untere Getriebezug "u" beschrieben, weil die diesbezügliche Beschreibung (unter Verwendung der entsprechenden Bezugszeichen) sich genauso auch auf den oberen Getriebezug "o" lesen läßt.

Das von der Welle 1 angetriebene Antriebsritzel 1v kämmt mit einem auf einer zweiten Zwischenwelle 3 sitzenden, größeren schrägverzahnten Rad 2uv. Auf der Welle 3 sitzt ein schrägverzahntes Rad 3u. Das entgegengesetzt schrägverzahnte Zahnrad 3u kämmt mit dem ebenfalls entgegengesetzt schrägverzahnten Zahnkranz 4uz des Zahnrades 4u. Der Zahnkranz 4uz ist über einen sogenannten "Kumpf", der detailliert anhand der Fig. 3 noch beschrieben wird, axial verschieblich und drehfest mit dem gemeinsamen Radkörper 4u verbunden. Dieser Radkörper 4u treibt über die gemeinsame Welle 4 schrägverzahnte Räder 5uh, 5uv, welche ihrerseits auf entgegengesetzt schrägverzahnte Abtriebsräder 6uh,6uv wirken, die auf einer gemeinsamen Welle 6 sitzen. Das Abtriebsrad 6uv wirkt ebenso wie das entsprechende Abtriebsrad 6ov des oberen Getriebezuges "o" auf ein Ritzel 7, welches auf der Schneckenwelle 11 zum Abtrieb des Schneckenextruders 12 sitzt. In gleicher Weise wirkt das Abtriebsrad 6uh ebenso wie das entsprechende Abtriebsrad 6oh des oberen Getriebezuges "o" auf ein Ritzel 8 der zweiten Schneckenwelle 9 zum Antrieb des Schneckenextruders 10. Jedes Ritzel 7,8 wird also über zwei Zahneingriffe von den beiden Getriebezügen "u" und "o" angetrieben, wodurch eine Halbierung der Zahnkräfte erreicht ist.

Die Verbindung des Zahnkranzes 4uz mit dem zugehorigen Radkörper 4u läßt dazwischen eine freie axiale Verschiebung zu, so daß die axiale Verschieblichkeit der Welle 4 zur Lasteinstellung gegenüber der Welle 3 gewährleistet ist.

Anhand der Fig. 3 sei nun der Aufbau des "Kumpfes" im einzelnen erläutert, wobei gleiche Bezugszahlen wie in Fig. 2 für gleiche bzw. gleichartige Teile verwendet sind.

Das auf der Welle 3 sitzende Zahnrad 3u ist mit dieser verbunden, während der damit zusammenwirkende, ebenfalls schrägverzahnte Zahnkranz 4uz mit dem Radkörper 4u über den eine axiale Verschiebung, jedoch keine Relativbewegung im Umfangsrichtung zulassenden "Kumpf" verbunden ist. Dieser Kumpf umfaßt eine axiale Bewegung zulassende Verbindung, die eine Mitnahme in Umfangsrichtung sicherstellt, z.B. eine Keilverzahnung 4uk, welche eine Mitnahme in Umfangsrichtung sicherstellt und beidseitig zwei im Querschnitt winkelförmige Gleitbuchsen 4um, 4un, welche ein axiales Gleiten der Zahnkränze 4uz auf dem gemeinsamen Radkörper 4u zuläßt. Dadurch ist sichergestellt, daß die Zwischenwelle 4 sich zur Lasteinstellung axial frei einstellen kann. Der Radkörper 4u ist auf seiner Welle 4 gegen Bewegung axial und in Umfangsrichtung gesichert, beispielsweise aufgeschrumpft.

Der global mit dem Bezugszeichen 4uk bezeichnete Kumpf ist stets dem Rad 4u zugeordnet.

Bei allen Ausführungen ist der Zahnkranz 4uz axial abgestützt.

Bei der Ausführung nach Fig. 3 geschieht dies mittels Druckkämmen 3uv und 3uh, die an Abstützflächen 4uv bzw. 4uh an den beiden Stirnseiten 4uv, 4uh des Zahnkranzes angreifen. Die Druckkämme sind auf der Welle 3 befestigt, welche ihrerseits axial festgelegt ist. Es ist alternativ auch denkbar, die Druckkämme auf der Welle 4 festzulegen.

Bei der Ausführung nach den Fig. 4 und 5 ist der schrägverzahnte Zahnkranz 4uz beidseitig axial mittels Stutzringen 1uh, 1uv abgestützt, die mit dem Gehäuse des Getriebes (nicht gezeigt) verbunden bzw. damit einstückig sind. Die Stützringe greifen über die Flansche mit einem Gleitbelag (nicht bezeichnet) an den seitlichen Stirnseiten 4uh, 4uv des Zahnkranzes 4uz an.

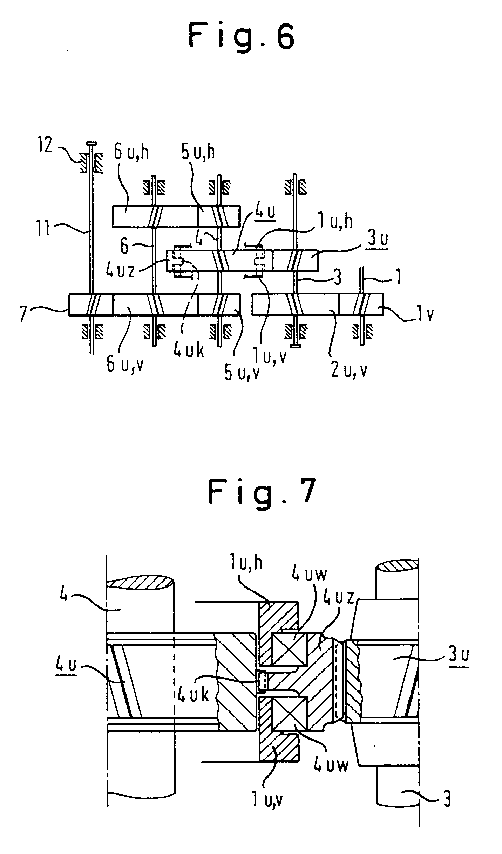

Bei der Ausführung nach den Fig. 6 und 7 sind die Gleitbuchsen 4um, 4un der übrigen Ausführungen des Kumpfes durch Wälzlager bzw. Gleitlager 4uw ersetzt, die zwischen die Stützringe 1uh, 1uv und den Zahnkranz 4uz eingebaut sind.

## Patentansprüche

1. Getriebe, bei dem das von einer Antriebswelle (1) zu übertragende Drehmoment von einem ersten Antriebsritzel (1v) auf zwei auf einer gemeinsamen Welle (6) sitzende, entgegengesetzt schrägverzahnte Abtriebsräder (6uh,6uv) aufgeteilt wird, wobei zwischen der Welle (1) des Antriebsritzels (1v) und der Welle der Abtriebsräder (6uh,6uv) zwei Zwischenwellen (3,4) vorgesehen sind, die ein Paar miteinander kämmende Zahnräder (3u,4u) tragen und von denen die erste Zwischenwelle (4) außerdem zwei mit den Abtriebsrädern (6uh,6uv) kämmende, entgegengesetzt schrägverzahnte Zwischenräder (5uh,5uv) trägt, dadurch gekennzeichnet, daß die miteinander kämmenden Zahnräder (3u,4u) einfach schrägverzahnt ausgebildet sind, daß der Zahnkranz (4uz) des Zahnrades (4u) gegenüber seiner Zwischenwelle (4) axial verschiebbar angeordnet ist und daß beidseitig des Zahnkranzes (4uz) gehäusefeste Stützringe (1uh,1uv) zum Abstützen der durch die Schrägverzahnung der Zahnräder (3u,4u) erzeugten Axialkräfte angreifen.

2. Getriebe nach Anspruch 1, dadurch gekennzeichnet, daß zwischen den gehäusefesten Stützringen (1uh,1uv) und dem axial beweglichen Zahnkranz (4uz) Lager (4um,4un,4uw) eingebaut sind.

3. Getriebe nach einem der Ansprüche 1 bis 2 zum Antrieb der beiden Schneckenwellen (9,11) eines Doppelschneckenextruders, dadurch gekennzeichnet, daß das eine Abtriebsrad (6uv) mit einem Ritzel (7) der einen Schneckenwelle (11) und das andere Abtriebsrad (6uh) mit einem Ritzel (8) der anderen Schneckenwelle (9) kämmt und daß auf der Antriebswelle (1) ein zweites Abtriebsritzel (1h) sitzt, das zur Drehmomentaufteilung über ein zweites, gemäß einem der Ansprüche 1 bis 2 ausgebildetes Getriebe auf die beiden Ritzel (7,8) der Schneckenwelle (9,11) wirkt.

## Claims

1. Transmission, in which the torque to be transmitted by a driveshaft (1) is distributed by a first drive pinion (1v) to two driven wheels (6uh, 6uv) which are helically toothed in opposite sense and seated on a common shaft (6), wherein provided between the shaft (1) of the drive pinion (1v) and the shaft of the driven wheels (6uh, 6uv) are two intermediate shafts (3, 4), which carry a pair of meshing gearwheels (3u, 4u) and of which the first intermediate shaft (4) moreover carries two intermediate wheels (5uh, 5uv) which are helically toothed in opposite sense and mesh with the driven wheels (6uh, 6uv), characterised thereby that the meshing gearwheels (3u, 4u) are formed with plain helical toothing, that the gear rim (4uz) of the gearwheel (4u) is arranged to be axially displaceable relative to its intermediate shaft (4) and that support rings (1uh, 1uv), which are fast with the housing, engage at both sides of the gear rim (4uz) for support of the axial forces generated by the helical toothing of the gearwheels (3u, 4u).

2. Transmission according to claim 1, characterised thereby that bearings (4um, 4un, 4uw) are installed between the support rings (1uh, 1uv) fast with the housing and the axially movable gear rim (4uz).

3. Transmission according to one of claims 1 to 2 for the driving of the two worm shafts (9, 11) of a double worm extruder, characterised thereby that the one driven wheel (6uv) meshes with a pinion (7) of the one worm shaft (11) and the other driven wheel (6uh) meshes with a pinion (8) of the other worm shaft (9) and that seated on the drive shaft (1) is a second driven pinion (1h), which for the distribution of torque acts on the two pinions (7, 8) of the worm shafts (9, 11) by way of a second transmission constructed according to one of claims 1 to 6.

## Revendications

1. Train d'engrenages dans lequel le couple de rotation qui doit être transmis à partir d'un arbre d'entrée (1) est réparti par un premier pignon d'entraînement (1v) sur deux roues de sortie (6uh, 6uv) montées sur un arbre commun (6) et dentées obliquement en sens inverse, deux arbres intermédiaires (3, 4) étant prévus entre l'arbre (1) du pignon d'entrée (1v) et l'arbre des roues de sortie (6uh, 6uv), lesquels arbres intermédiaires portent une paire de roues dentées (3u, 4u) engrenées l'une dans l'autre, le premier arbre intermédiaire (4) portant en outre deux roues intermédiaires (5uh, 5uv) et qui engrènent avec les roues de sortie (6uh, 6uv), qui sont dentées obliquement en sens inverse, train caractérisé en ce que les roues dentées (3u, 4u), qui engrènent l'une dans l'autre, sont simplement dotées d'une configuration de denture oblique, en ce que la couronne dentée (4uz) de la roue dentée (4u) est disposée de façon à pouvoir se déplacer axialement par rapport à son arbre intermédiaire (4) et en ce que sur les deux côtés de la couronne dentée (4uz) s'appliquent des bagues d'appui (1uh, 1uv) solidaires du boîtier et destinées à servir d'appui à l'ensemble des forces axiales produites par la denture oblique des roues dentées (3u, 4u).

2. Train d'engrenages selon la revendication 1, caractérisé en ce qu'entre les bagues d'appui (1uh, 1uv) solidaires du boîtier et la couronne dentée (4uz) mobile axialement, sont montés des paliers (4um, 4un, 4uw).

3. Train d'engrenages selon les revendications 1 à 2, destiné à l'entraînement des deux arbres (9, 11) de vis sans fin d'une extrudeuse à deux vis sans fin, caractérisé en ce que l'une des roues de sortie (6uv) engrène avec un pignon (7) de l'un des arbres (11) de vis sans fin, et en ce que l'autre roue de sortie (6ub) engrène avec un pignon (8) de l'autre arbre (9) de vis sans fin et en ce que, sur l'arbre d'entraînement (1) est monté un deuxième pignon de sortie (1h) qui a pour effet de répartir, par l'intermédiaire d'un deuxième train d'engrenages conformé selon une des revendications 1 ou 2, le couple de rotation sur les deux pignons (7, 8) des arbres (9, 11) de vis sans fin.
